# EUROPÄISCHE PATENTSCHRIFT

(11) **EP 2 765 516 B1**
(45) Veröffentlichungstag und Bekanntmachung des Hinweises auf die Patenterteilung: **07.03.2018**
(21) Anmeldenummer: 14455001.9
(22) Anmeldetag: 31.01.2014
(51) Int. Cl.: G06F 11/30, G06F 11/36

(54) **Verfahren zur Überprüfung eines Computernetzwerkes**
Method for checking a computer network
Procédé de vérification d'un réseau informatique

(30) Priorität: 01.02.2013 AT 500762013
(43) Veröffentlichungstag der Anmeldung: 13.08.2014
(73) Patentinhaber: Frequentis AG, 1100 Wien (AT)
(72) Erfinder: Podlas, Rainer, 2230 Gänserndorf (AT)
(74) Vertreter: Wildhack & Jellinek

(56) Entgegenhaltungen:
- US-A- 5 596 714
- US-A1- 2003 131 088
- US-A1- 2012 174 067

## Beschreibung

Die Erfindung betrifft ein Verfahren gemäß dem Oberbegriff des Patentanspruchs 1. Weiters betrifft die Erfindung ein Computersystem gemäß dem Oberbegriff des Patentanspruchs 10.

Die Erfindung wird vorteilhafterweise zur Vorbereitung, Durchführung und Überwachung von Tests von Computersystemen eingesetzt. Insbesondere kann die Erfindung vorteilhaft eingesetzt werden, um eine kontinuierliche Auslieferung und Anpassung von Hardware und Software bei dem zu überprüfenden Computersystem zu ermöglichen und die Funktionalität des gesamten Netzwerks mit sämtlichen Computern rasch und effizient zu prüfen.

Aus dem Stand der Technik sind Verfahren bekannt, mit denen einzelne Komponenten eines Netzwerks unabhängig voneinander überprüfbar sind, wobei die übrigen Komponenten gegebenenfalls simuliert werden. Hierbei besteht der Nachteil, dass das Zusammenwirken der einzelnen Komponenten nur schwer überprüft werden kann. Zudem besteht der Nachteil, dass die Durchführung eines einzigen Testszenarios nur äußerst schwer zu bewerkstelligen ist und das System nur mit großem Aufwand in vorgegebene, kritische oder zu untersuchende Situationen zu bringen ist. Schließlich ist es mit bekannten Testsystemen aus dem Stand der Technik nur mit großem Aufwand möglich, auf jedem einzelnen zu untersuchenden Rechner des Netzwerks die für ihn passende zu überprüfenden Software zu installieren. Bei US 2012/0174067 handelt es sich um eine Verfahren bei dem man die Durchführung gleicher "Interaktionen" möglichst zeitgleich/parallel über mehrere Clients gegen eine Server-Anwendung steuert/synchronisiert. Dieses vordergründig um herauszufinden/zu testen ob die Server-Anwendung mit den gleichzeitigen von mehreren Clients durchgeführten richtig umgehen kann. Mit dem Verfahren aus D1 ist es möglich, verteilte idente Kommandos parallel durchzuführen und gegen (vorab) bekannte Resultate zu überprüfen. Dieses Verfahren kann also insbesondere für Lastsimulationen von Webservern eingesetzt werden. Hierbei wird versucht bereits im Vorfeld zu erwartende Fehler mittels gleichzeitiger Interaktionen eines Kommandos über mehrere Clients zu verursachen und zu validieren.

Aus dem Dokument US 5,596,7 14, ist ein Verfahren bekannt, mit dem man parallel auf Workstations verschiedene GUI Applikationen testen kann, ohne aber den gleichzeitigen Betrieb/ die Verwendung anderer Applikationen (die nicht "under test" stehen) zu stören.

In US 2003/13 1088 wird dargestellt, wie einzelne Maschinen für einen durchzuführenden Test eines Cornputerprogramms vorteilhaft und automatisch ausgewählt werden Aufgabe der Erfindung ist es, die dargestellten Probleme zu überwinden und ein Verfahren sowie ein Computersystem zur Verfügung zu stellen, mit dem eine kontinuierliche Weiterentwicklung von einzelnen Softwarekomponenten durch ein automatisiertes Testverfahren begleitet wird und das Computersystem auf Fehler untersucht werden kann. Durch die Erfindung wird weiters erreicht, dass auf einem vorgegebenen generischen Computersystem eine Vielzahl von unterschiedlichen realen Computersystemen simuliert und zur Prüfung der Funktionsfähigkeit von Software für unterschiedliche Computer oder Komponenten innerhalb des Computersystems herangezogen werden kann. Die Erfindung betrifft ein Verfahren zur Überprüfung einer Anzahl von auf einem Computersystem zusammenwirkenden Computerprogrammen auf Programmfehler, wobei das Computersystem eine Anzahl von zu überprüfenden, miteinander, insbesondere über ein Netzwerk, in Datenverbindung stehenden Computern aufweist, auf denen jeweils zumindest eines der zu überprüfenden Computerprogramme installiert ist und abläuft, wobei das Computersystem mit zumindest einem Zentralcomputer, auf dem ein Teststeuerprogramm ausgeführt wird, derart in Verbindung steht, dass jeder Computer mit dem Zentralcomputer in Datenverbindung steht. Die Erfindung sieht vor, dass auf jedem der Computer jeweils ein Steuerungsprogramm ausgeführt wird, wobei vom Steuerungsprogramm bei Einlangen eines Steuersignals aus einer, insbesondere zur Laufzeit veränderbaren, Menge von durch das jeweilige Computerprogramm verarbeitbaren Steuersignalen eine durch das jeweilige Steuersignal vorgegebene Programmaktion vorgenommen wird, die vorzugsweise einer beim Ablauf des Computerprogramms, insbesondere vom Benutzer, vornehmbaren oder auslösbaren Programmaktion entspricht, und auf Anfrage der jeweilige Zustand des Computers sowie des Computerprogramms in Form einer Meldung an den Zentralcomputer übermittelt wird, dass Steuersignale aus einer, insbesondere zur Laufzeit veränderbaren, Menge von durch das jeweilige Computerprogramm verarbeitbaren Steuersignalen vom Zentralcomputer an die einzelnen Computer jeweils, insbesondere in einer vorgegebenen Reihenfolge, übermittelt werden, sodass entsprechend dieser Steuersignale bei dem Computerprogramm des jeweiligen Computers Programmaktionen vorgenommen werden, dass vom Zentralcomputer im Anschluss an die Übermittlung der Steuersignale der jeweilige Zustand eines oder mehrerer Computer abgefragt wird und der Zustand mit vorab vorgegebenen Sollwerten verglichen wird, wobei insbesondere der weitere Ablauf des Teststeuerprogramms von der Überprüfung dieses Zustands abhängt und/oder bei je nach ermitteltem Zustand jeweils ein diesem Zustand zugeordneter Programmteil des Teststeuerprogramms ausgeführt wird, und dass bei einem positiven Vergleichsergebnis die Computerprogramme als korrekt hinsichtlich eines möglichen Programmfehlers identifiziert werden.

Um die Interaktion zwischen zwei Computern im Computernetzwerk, zwischen denen eine Nachricht übermittelt wurde, überprüfen zu können, kann vorgesehen sein, dass einer der Computer mit einem Steuersignal beaufschlagt und damit zur Übermittlung von Daten oder Informationen an zumindest einen weiteren Computer veranlasst wird, und dass der Zustand zumindest dieses weiteren Computers oder des auf diesem Computer ausgeführten Computerprogramms, insbesondere vom Zentralcomputer, abgefragt wird, wobei insbesondere an diesen weiteren Computer im Zuge der Überprüfung noch kein Steuersignal übermittelt wurde.

Um die Bedienung einer graphischen Benutzeroberfläche durch einen Benutzer prüfen zu können, kann vorgesehen sein, dass das jeweilige Computerprogramm über eine graphische Bedienerschnittstelle umfassend eine Vielzahl von mit einer Tastatur oder einer Maus betätigbaren Schaltfeldern verfügt, wobei dem Steuerungsprogramm für das ihm zugeordnete Computerprogramm eine Anzahl von bei der Bedienung des Programms vom Benutzer vornehmbaren oder auslösbaren Interaktionen für die einzelnen Schaltfelder vorgegeben werden, die bei Einlangen eines der Interaktion zugeordneten Steuersignals ausgeführt werden.

Zu diesem Zweck kann insbesondere vorgesehen sein, dass das Steuerungsprogramm bei Vorliegen eines Steuersignals Interaktionen mit dem Computerprogramm vornimmt, die bei dem zu steuernden Computerprogramm das Klicken oder das Ziehen eines Schaltfelds mit der Maus oder die Tastatureingabe von Zeichen in das jeweilige Schaltfeld bewirkt.

Um eine einfache, rasche und effiziente Übertragung und Bereithaltung der zu überprüfenden Computerprogramme auf die einzelnen Computer des Netzwerks vor der Durchführung des Tests sowie eine verbesserte Steuerung der Überprüfung ermöglichen, kann vorgesehen sein, dass das Computerprogramm sowie das Steuerungsprogramm vor oder während der Durchführung der Überprüfung vom Zentralcomputer auf den jeweiligen Computer übertragen, auf diesem abgespeichert, gestartet, für die Interaktion vorbereitet und/oder in einen bestimmten Zustand gebracht werden

Zur Beendigung und Deinstallation nach der Durchführung des Tests kann vorgesehen sein, dass das Computerprogramm sowie das Steuerungsprogramm während oder nach der Überprüfung durch den Zentralcomputer gestoppt werden und/oder dass das Computerprogramm vom Speicher des jeweiligen Computers gelöscht wird.

Zur Instandsetzung des für den Test verwendeten Computernetzwerks kann vorgesehen sein, dass die Computer vor der Durchführung der Überprüfung gemäß ihrem zu prüfenden Einsatzzweck miteinander in Datenverbindung gebracht werden und dass zumindest ein Zentralcomputer mit allen Computern des Netzwerks in Datenverbindung gebracht wird.

Um die Übertragung von Nachrichten innerhalb des Computernetzwerks überprüfen zu können, kann vorgesehen sein, dass vom Zentralcomputer ein Steuersignal an das Steuerprogramm eines Computers übermittelt wird, das dessen Programm zu einer Programmaktion veranlasst, mit der Daten von diesem Computer an einen weiteren Computer übertragen werden, und dass anschließend der Zustand dieses weiteren Computers oder des auf diesem weiteren Computer ablaufenden Programms vom Zentralcomputer abgefragt wird, und dass anhand des so ermittelten Zustands überprüft wird, ob die vom Computer zum weiteren Computer übermittelten Daten tatsächlich ordnungsgemäß von diesem empfangen und/oder verarbeitet worden sind.

Um eine flexible Anpassung des jeweiligen Computers an unterschiedliche Test- und Simulationsannahmen zu ermöglichen, kann vorgesehen sein, dass vom Zentralcomputer an die Computer ein Schnittstellenprogramm umfassend eine Anzahl von jeweils einem Befehl zugeordneten Befehlsroutinen übermittelt wird, wobei die einzelnen Befehlsroutinen zur Steuerung des zu prüfenden Programms ausgebildet sind, und - dass das Steuerprogramm des jeweiligen Computers bei Übermittlung des jeweiligen Befehls die dem jeweiligen Befehl zugeordnete Befehlsroutine des Schnittstellenprogramms ausführt und demgemäß das zu prüfende Programm ansteuert und Programmaktionen des zu steuernden Programms auslöst.

Zur Anpassung während einer Testdurchführung bzw. zur Laufzeit der zu überprüfenden Komponenten des Computersystems kann hierbei insbesondere vorgesehen sein, dass das Schnittstellenprogramm vor der Übermittlung eines Befehls vom Zentralcomputer an die Computer, und gegebenenfalls auch vor der Übermittlung weiterer Befehle, vom Zentralcomputer an einen oder mehrere der Computer übertragen wird.

Die Erfindung löst die Aufgabe ferner mit einem Computersystem, das zur Durchführung eines Tests auf einem Computernetzwerk ausgebildet ist. Dieses Computersystem umfasst eine Anzahl von miteinander, insbesondere über ein Netzwerk, in Datenverbindung stehenden Computern, auf denen jeweils ein Computerprogramm installiert ist. Erfindungsgemäß ist bei einem solchen Computersystem vorgesehen, dass zumindest ein mit allen Computern in Datenverbindung stehender Zentralcomputer, auf dem ein Teststeuerprogramm abläuft, vorgesehen ist, dass auf jedem der Computer jeweils ein Steuerungsprogramm abgespeichert ist, das, wenn es auf dem Computer ausgeführt wird, bei Einlangen eines Steuersignals aus einer, insbesondere zur Laufzeit veränderbaren, Menge von durch das jeweilige Computerprogramm verarbeitbaren Steuersignalen vorgegebene Programmaktion vornimmt, die vorzugsweise einer beim Ablauf des Computerprogramms, insbesondere vom Benutzer, vornehmbaren oder auslösbaren Programmaktionen entspricht, dass der Zentralcomputer jeweils, insbesondere in einer vorgegebenen Reihenfolge, Steuersignale an die Computer übermittelt, sodass entsprechend dieser Steuersignale das Computerprogramm des jeweiligen Computers betätigt wird, dass der Zentralcomputer bei der Ausführung des Teststeuerungsprogramms im Anschluss an die Übermittlung der Steuersignale den jeweiligen Zustand eines oder mehrerer Computer abfragt und den Zustand mit vorab vorgegebenen Sollwerten vergleicht, wobei insbesondere der weitere Ablauf des Teststeuerprogramms von der Überprüfung dieses Zustands abhängt und/oder der Zentralcomputer je nach ermitteltem Zustand jeweils einen diesem Zustand zugeordneten Programmteil des Teststeuerprogramms ausführt, und dass der Zentralcomputer bei der Ausführung des Teststeuerungsprogramms bei einem positiven Vergleichsergebnis die Computerprogramme als korrekt hinsichtlich eines möglichen Programmfehlers identifiziert.

Um die Interaktion zwischen zwei Computern im Computernetzwerk, zwischen denen eine Nachricht übermittelt wurde, überprüfen zu können, kann vorgesehen sein, dass der Zentralcomputer bei der Ausführung des Teststeuerungsprogramms einen der Computer mit einem Steuersignal beaufschlagt und zur Übermittlung von Daten oder Informationen an zumindest einen weiteren Computer veranlasst, und insbesondere den Zustand zumindest dieses weiteren Computers oder des auf diesem weiteren Computer ausgeführten Computerprogramms abfragt, wobei der Zentralcomputer an diesen weiteren Computer im Zuge der Prüfung zuvor noch kein Steuersignal übermittelt hat.

Um die Bedienung einer graphischen Benutzeroberfläche durch einen Benutzer prüfen zu können, kann vorgesehen sein, dass das jeweilige Computerprogramm über eine graphische Bedienerschnittstelle umfassend eine Vielzahl von mit einer Tastatur oder einer Maus betätigbaren Schaltfeldern verfügt, wobei das Steuerprogramm bei Einlangen eines vorgegebenen Steuersignals, das einer vom Benutzer vornehmbaren oder auslösbaren Interaktion mit einem der Schaltfelder entspricht, die jeweilige Interaktion beim zu steuernden Computerprogramm veranlasst.

Zu diesem Zweck kann insbesondere vorgesehen sein, dass das Steuerungsprogramm Interaktionen zur Verfügung hält, die bei dem zu steuernden Computerprogramm das Klicken oder das Ziehen eines Schaltfelds mit der Maus oder eine Tastatureingabe von Zeichen in das jeweilige Schaltfeld bewirkt.

Um eine einfache, rasche und effiziente Übertragung und Bereithaltung der zu überprüfenden Computerprogramme auf die einzelnen Computer des Netzwerks vor der Durchführung des Tests sowie eine verbesserte Steuerung der Überprüfung zu ermöglichen, kann vorgesehen sein, dass der Zentralcomputer vor oder während der Ausführung des Teststeuerungsprogramms das Computerprogramm sowie das Steuerungsprogramm auf den jeweiligen Computer überträgt, auf diesem abspeichert und/oder dessen Ausführung veranlasst und/oder das Computerprogramm für die Vornahme weiterer Interaktionen zur Verfügung hält

Zur Beendigung und Deinstallation nach der Durchführung des Tests kann vorgesehen sein, dass der Zentralcomputer während oder nach der Ausführung des Teststeuerprogramms das Computerprogramm sowie das Steuerungsprogramm nach der Überprüfung beendet und/oder das Computerprogramm vom Speicher des jeweiligen Computers löscht.

Zur Instandsetzung des für den Test verwendeten Computernetzwerks kann vorgesehen sein, dass die Computer bei der Durchführung der Überprüfung gemäß ihrem Einsatzzweck miteinander in Datenverbindung stehen und dass zumindest ein Zentralcomputer mit allen Computern des Netzwerks in Datenverbindung steht.

Um die Übertragung von Nachrichten innerhalb des Computernetzwerks überprüfen zu können, kann vorgesehen sein, dass der Zentralcomputer ein Steuersignal an das Steuerprogramm eines Computers übermittelt, das dessen Programm zu einer Interaktion veranlasst, mit der Daten von diesem Computer an einen weiteren Computer übertragen werden, und dass der Zentralcomputer anschließend der Zustand dieses weiteren Computers oder des auf diesem weiteren Computer ablaufenden Programms vom Zentralcomputer abfragt, und anhand des so ermittelten Zustands überprüft, ob die vom Computer zum weiteren Computer übermittelten Daten tatsächlich an diesen übermittelt wurden.

Die Erfindung betrifft ferner ein Teststeuerungsprogramm zur Durchführung eines erfindungsgemäßen Verfahrens auf dem Zentralcomputer.

Weiters betrifft die Erfindung auch ein Steuerungsprogramm zur Durchführung eines erfindungsgemäßen Verfahrens auf einem Computer auf dem zusätzlich ein zu überprüfendes Computerprogramm abgespeichert ist.

Schließlich betrifft die Erfindung auch einen Datenträger, auf dem eine solches Testprogramm oder Steuerprogramm abgespeichert ist.

Ein exemplarisches Ausführungsbeispiel der Erfindung wird anhand der folgenden Zeichnungsfiguren näher erläutert.

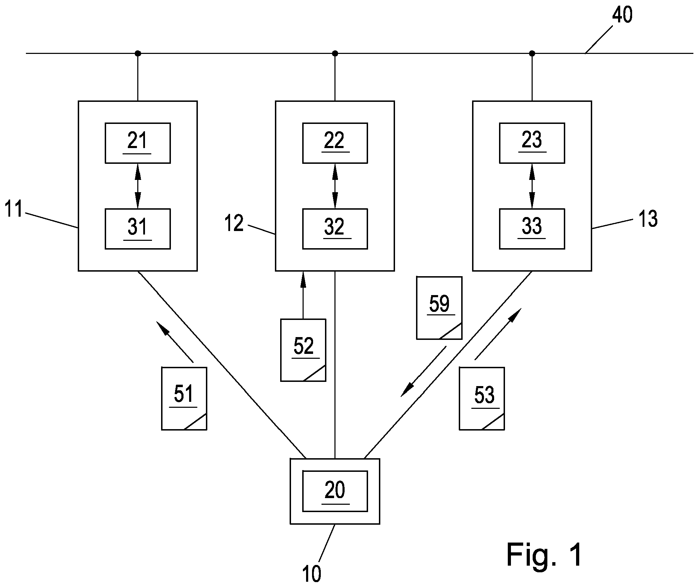

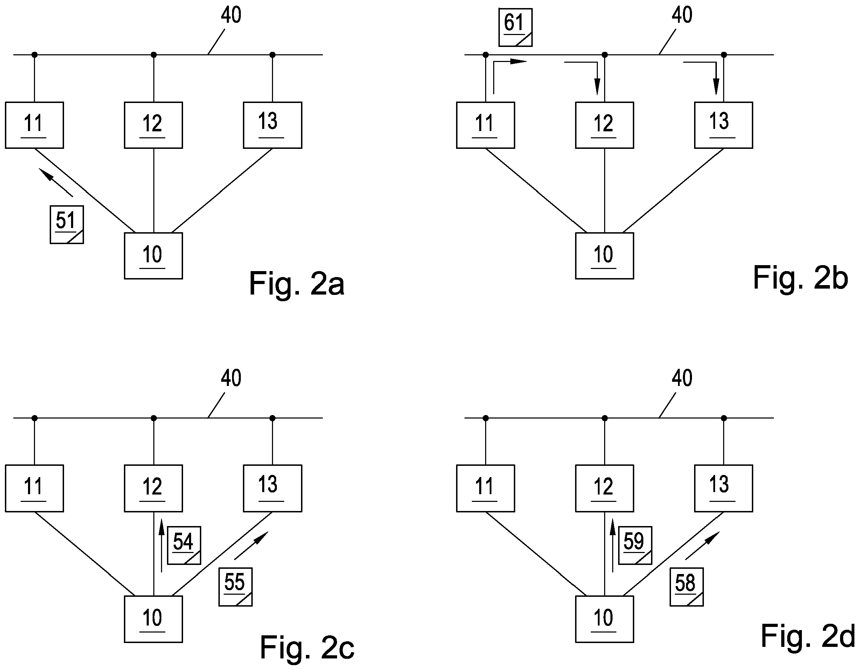

Fig. 1 zeigt das Computersystem sowie den Austausch von Steuersignalen zwischen dem Zentralcomputer und den einzelnen Computern des zu untersuchenden Computernetzwerks. Fig. 2a bis 2d zeigen schematisch die Übertragung von Nachrichten während eines automatisierten Testvorgangs.

Typischerweise handelt es sich bei dem zu untersuchenden Computernetzwerk 40 (Fig. 1) um ein Kommunikationsnetzwerk, z.B. ein Notfallnetzwerk von Einsatzkräften, ein Datennetzwerk für die Übermittlung von Verkehrsinformationen, insbesondere von Luftverkehrsinformationen, oder ein militärisches Netzwerk zur Koordination von militärischen Aktionen. Jeder einzelne Kommunikationsteilnehmer verfügt über einen Computer 11, 12, 13, der Teil des Netzwerks 40 ist und über das Netzwerk 40 mit den übrigen Computern 11, 12, 13 des Netzwerks 40 in Verbindung steht.
Da die vorstehend angesprochenen Netzwerke höchste Anforderungen an die Ausfallsicherheit stellen, wird ein Test neuer Software, beispielsweise neue Betriebssoftware eines Kommunikationscomputers in einem mit dem Netzwerk verbundenen Endgerätes, im laufenden Betrieb des Netzwerks zumeist nicht unmittelbar vorgenommen, da die jeweilige, das Endgerät benutzende Person durch die nicht getestete Software im schlimmsten Fall von den übrigen im Computernetzwerk befindlichen Kommunikationsteilnehmern abgeschnitten ist oder fehlerhafte Informationen an diese übermittelt. Gerade in sicherheitskritischen Anwendungen ist eine solche Vorgehensweise jedoch nicht akzeptabel bzw. vielfach verboten.

Für die Überprüfung der Funktionalität einer aktualisierten oder geänderten Software oder auch von aktualisierter oder geänderter Hardware wird somit das im Folgenden dargestellte Vorgehen gewählt: Es wird ein generisches Computernetzwerk 40 zur Verfügung gestellt, wobei auf jedem einzelnen Computer 11, 12, 13 jeweils ein Steuerungsprogramm 31, 32, 33 installiert ist, und abläuft. Darüber hinaus ist ein Zentralcomputer 10 vorgesehen, der mit den einzelnen Computern 11, 12, 13 des Computernetzwerks 40 in Datenverbindung steht. Auf dem Zentralcomputer 10 ist ein Teststeuerungsprogramm 20 installiert, das mit den Steuerungsprogrammen 31, 32, 33 der Computer 11, 12, 13 unmittelbar interagiert und diese Steuerungsprogramme 31, 32, 33 durch die Übermittlung von Befehlen zu Interaktionen veranlassen kann. Die Art und die Anzahl der Befehle sind nicht durch die Struktur der Steuerungsprogramme 31, 32, 33 oder des Teststeuerungsprogramms 20 vorgegeben, sondern sind vielmehr an das jeweilige zu untersuchende Programm 21, 22, 23 angepasst. Die Steuerungsprogramme 31, 32, 33 können die einzelnen Befehle des Zentralcomputers 10 bzw. des auf ihm ablaufenden Teststeuerungsprogramms 20 entgegennehmen.

In einem ersten Schritt, der auch als "ROLL OUT" bezeichnet wird und der den Test vorbereitet, werden die einzelnen zu untersuchenden Computerprogramme 21, 22, 23 auf die jeweiligen Computer 11, 12, 13 übertragen und auf diesen installiert. Hierzu überträgt der Zentralcomputer 10 einen Befehl an die einzelnen Steuerprogramme 31, 32, 33 auf den Computern 11, 12, 13. Diese Steuerprogramme 31, 32, 33 nehmen den Befehl entgegen und erhalten entweder unmittelbar mit dem Befehl oder auf Anfrage das jeweilige zu untersuchende oder zu prüfende Programm übermittelt. Anschließend erhalten die Steuerprogramme 31, 32, 33 den Befehl, die an sie übermittelten Programme 21, 22, 23 zu installieren und zur Ausführung bereitzuhalten.

Besonders vorteilhaft an diesem Vorgehen ist, dass neben dem Test des Computernetzwerks 40, der Computer 11, 12, 13 sowie der jeweils ablaufenden Computerprogramme 21, 22, 23 auch eine rasche Verteilung oder Installation der Computerprogramme 21, 22, 23 über die einzelnen Computer 11, 12, 13 sowie eine zentralisierte Steuerung aller Komponenten ermöglicht wird. Insbesondere kann durch die zentrale Steuerung mit dem Zentralcomputer 10 auch bewirkt werden, dass der laufende Test abgebrochen und von neuem gestartet wird oder dass sämtliche Computerprogramme 21, 22, 23 auf einen definierten Zustand gesetzt werden. Schließlich kann auch eine zentral gesteuerte Deinstallation der nicht mehr benötigten Computerprogramme 21, 22, 23 vorgenommen werden, beispielsweise um vor der Durchführung eines neuen Testlaufs Interaktionen mit bei einem vorhergehenden Test installierter Software auszuschließen.

Diese Programme 21, 22, 23 werden von den Steuerprogrammen 31, 32, 33 zur Laufzeit derart vorbereitet, dass sie über eine Schnittstelle von den Steuerprogrammen 31, 32, 33 Befehle erhalten können und umgekehrt auch über diese Schnittstelle Informationen an die Steuerprogramme übertragen können. Jedes der zu untersuchenden Programme 21, 22, 23 kann dabei über einen individuellen oder separaten Befehlssatz verfügen, wobei auch der Fall eintreten kann, dass einem Programm ein bestimmter Befehl unbekannt ist und daher eine Fehlermeldung zurückgegeben oder der Befehl ignoriert wird. Jedes zu untersuchende Programme 21, 22, 23 gibt somit die von ihm ausführbaren Befehle vor, kann jedoch auch im Zuge von Verbesserungen zur Laufzeit mit neuen Schnittstellenprogrammen und Befehlen ausgestattet werden. Ein bekannter Befehl, der auf die Durchführung einer bestimmten Aktion gerichtet ist, wird vom Programm 21, 22, 23 ausgeführt. Allenfalls kann eine Bestätigung an das Steuerprogramm 31, 32, 33 ergehen, dass der Befehl korrekt ausgeführt wurde oder alternativ eine Fehlermeldung an das Steuerprogramm 31, 32, 33 übermittelt werden. Ein Befehl, der auf die Zurückgabe einer bestimmten Information gerichtet ist, wird vom Programm 21, 22, 23 dadurch ausgeführt, dass die jeweilige Information über die Schnittstelle an das Steuerprogramm 31, 32, 33 übermittelt wird.

Selbstverständlich ist es auch möglich, auf einem Computer 11, 12, 13 mehrere zu prüfende Computerprogramme 21, 22, 23 zu installieren. Sämtliche der installierten zu prüfenden Computerprogramme 21, 22, 23 weisen jeweils eine Schnittstelle auf, die zur Schnittstelle des Steuerungsprogramms 31, 32, 33 kompatibel ist und einen Datenaustausch mit dem Steuerungsprogramm ermöglicht.

Nach der Installation der zu überprüfenden Programme 21, 22, 23 auf den einzelnen Rechnern 11, 12, 13 kann das Teststeuerungsprogramm 20 des Zentralcomputers 10 Befehle an die einzelnen zu überprüfenden Programme 21, 22, 23 geben. Hierfür wird zunächst ein Steuersignal 51, 52, 53 erstellt, das den jeweiligen auszuführenden Befehl in codierter Form enthält. Dieses Steuersignal 51, 52, 53 wird an den jeweiligen Computer 21, 22, 23 übermittelt, auf dem der im Steuersignal 51, 52, 53 codierte Befehl ausgeführt werden soll. Nach dem Einlangen des Steuersignals 51, 52, 53 beim jeweiligen Computer wird dieses Steuersignal vom jeweiligen Steuerungsprogramm 31, 32, 33 decodiert und der enthaltene Befehl wird über die Schnittstelle an das zu untersuchende Computerprogramm übermittelt.

In den Fig. 2a bis 2d ist das typische Vorgehen bei der Durchführung eines Tests des gesamten Netzwerks 40 von Computern 11, 12, 13 dargestellt, wobei auf jedem der Computer 11, 12, 13 jeweils ein Steuerprogramm 31, 32, 33 sowie jeweils ein an das Steuerprogramm angepasstes und über eine gemeinsame Schnittstelle mit diesem Steuerprogramm verfügendes Computerprogramm 21, 22, 23 installiert und betriebsbereit ist.

Im ersten Schritt des Tests, der in Fig. 2a dargestellt ist, wird ein erster Befehl vom Zentralcomputer 10 bzw. von dem auf ihm ablaufenden Teststeuerprogramm 20 generiert. Auf Grundlage dieses Befehls erstellt der Zentralcomputer ein erstes Steuersignal 51, das diesen Befehl enthält. Das erste Steuersignal 51 wird an den ersten der drei dargestellten Computer 11 des Netzwerks 40 übermittelt und von diesem decodiert. Der im Steuersignal 51 enthaltene Befehl wird vom Steuerprogramm 31 des ersten Computers 11 empfangen und über die gemeinsame Schnittstelle an das zu untersuchende oder zu prüfende Programm 21 übermittelt.

Der Zweck des Befehls liegt darin, den ersten Computer 11 zu einer Datenübertragung zu veranlassen, wobei der erste Computer 11 ein Datenpaket 61 an die übrigen beiden Computer 12, 13 im Netzwerk 40 übermittelt. (Fig. 2b) Das zu prüfende Programm 21 erstellt auf Grundlage des Befehls das Datenpaket 61 und übermittelt dieses Datenpaket 61 an die übrigen beiden Computer 12, 13. Im vorliegenden besonderen Ausführungsbeispiel indiziert das Datenpaket 61 einen Notfall, der von einem Computer 11 eines Mobiltelefons abgegeben wurde, wobei das Datenpaket 61 über ein Telefonnetzwerk an zwei weitere Computer 12, 13, nämlich eine Notfallzentrale 12 sowie eine Ersatzzentrale 13, abgegeben oder übermittelt wurde.

Der erste Computer 11 bzw. das Mobiltelefon ist über eine Datenleitung mit dem Zentralcomputer 10 verbunden und wird durch einen Befehl zu einer Interaktion mit den übrigen beiden Computern 12, 13, nämlich im vorliegenden Fall zur Abgabe einer Notfallmeldung an diese Computer 11, 12, veranlasst. Diese Notfallmeldung sollte bei korrekter Durchführung auch von diesen Computern 12, 13 wahrgenommen werden. Diese beiden Computer 12, 13 empfangen anschließend das vom ersten Computer 11 über das Netzwerk 40 übermittelte Datenpaket 61 mit der Notfallmeldung. Die auf den Computern 12, 13 installierten Computerprogramme 22, 23 registrieren den Eingang des Datenpakets 61 und speichern diese Information auf ihrem jeweiligen Speicher ab.

In einem dritten Schritt, dargestellt in Fig. 2c, soll geprüft werden, ob die Interaktion zwischen den einzelnen Computern 11, 12, 13 tatsächlich wie gewünscht funktioniert hat. Hierzu fragt der Zentralcomputer 10 den Zustand der beiden Computer 12, 13 ab, an die das Datenpaket 61 gerichtet war. Der Zentralcomputer 10 übermittelt jeweils einen Befehl in Form eines Steuersignals 54, 55 an die beiden Computer 12, 13, um zu überprüfen, ob das Datenpaket 61 bei den jeweiligen Computern 12, 13 eingegangen ist. Die in den Steuersignalen 54, 55 codierten Befehle veranlassen die auf den Computern 12, 13 laufenden Programme 22, 23 zur Übermittlung der bei ihnen eingelangten Meldungen an das jeweilige Steuerprogramm 32, 33 und über dieses an den Zentralcomputer 10.

Auf diese Weise kann das im Zentralcomputer 10 ablaufende Testprogramm 20 ermitteln, ob das Datenpaket 61, zu dessen Absendung der Zentralcomputer 10 den ersten Computer 11 veranlasst hat, bei den beiden übrigen Computern 12, 13 angekommen ist. Die beiden Computer 12, 13 übermitteln jeweils eine Meldung 58, 59 (Fig. 2d) an den Zentralcomputer 10 zurück, die eine Liste der bei ihnen eingelangten Datenpakete 61 enthält. Stellt der Zielcomputer 10 fest, dass die vom ersten Computer 11 abgesandte Nachricht nicht bei beiden übrigen Computern 12, 13 angekommen ist, so kann er dadurch feststellen, dass insgesamt ein Fehler bei der Datenübertragung im Computernetzwerk 40 vorliegt.

Eine bevorzugte Weiterbildung der Erfindung wird im Folgenden näher dargestellt. Eine Vielzahl der zu überprüfenden Programme 11, 12, 13 verfügt über eine graphische Benutzerschnittstelle sowie die Möglichkeit der Reaktion auf Steuereingaben mit der Maus und mit der Tastatur. Für den automatisierten Test von Software kann es in bestimmten Fällen auch von Relevanz sein, die Reaktion des Programms auf bestimmte Mausaktionen, insbesondere die Betätigung von Schaltflächen mit der Maus, oder auf bestimmte Tastaturbetätigungen zu überprüfen. So kann es beispielsweise erforderlich sein, zu überprüfen, ob das Auslösen eines Alarms durch Betätigung einer Schaltfläche an einem der Computer 11 durch Klicken der Maus auch zu einer Änderung des Betriebszustands der übrigen Computer 12, 13 dergestalt führt, dass der Alarmzustand graphisch oder akustisch dargestellt wird.

Durch Übermittlung eines Steuersignals 51 an den ersten Computer 11 wird ein Befehl an das im ersten Computer 11 ablaufende Steuerprogramm 31 übermittelt. Dieses Steuerprogramm 31 übermittelt den Befehl über die Schnittstelle an das zu überprüfende Programm 21. Zuerst wird die Position der jeweiligen Schaltfläche ermittelt. Falls die Schaltfläche nicht sichtbar ist, werden gegebenenfalls weitere Schaltflächen betätigt, um schließlich die Schaltfläche sichtbar zu machen. Anschließend wird die Position der jeweiligen Schaltfläche abgefragt und der Mauszeiger an die jeweilige Position gebracht. Schließlich wird eine Mausaktion ausgelöst und diejenige Routine ausgeführt, die auch beim Klicken der Maus betätigt wird.

Selbstverständlich muss jedoch nicht jede durch den Zentralcomputer 10 ausgelöste Interaktion auch durch einen Benutzer unmittelbar auf einem der Computer 11, 12, 13 vornehmbar sein. So kann es beispielsweise von Vorteil sein, einen bestimmten Programmzustand in das auf einem der Computer 11, 12, 13 ablaufende Computerprogramm 21, 22, 23 in einem Schritt zu laden, ohne die möglicherweise hierfür erforderlichen Benutzerinteraktionen durch unmittelbares Ausführen der vom Benutzer anwählbaren Routinen nachzuvollziehen. Durch eine solche Maßnahme können die zu untersuchenden Programme schneller in einen Ausgangszustand zur Vornahme von Tests versetzt werden.

Besonders vorteilhaft ist die vorliegende Ablaufsteuerung über den Zentralcomputer, da von diesem aus unterschiedliche Testsituationen und Testszenarien sowie auch Installationsszenarien, auch als "STORIES" bezeichnet, in einem zentralen Ablaufplan ausgeführt werden können, wobei als Teil der Testszenarien auch Installationszenarien in die Testdurchführung mit eingebunden werden können. Es ist dabei auch möglich, dass einzelne Programmteile des Teststeuerprogramms 20 voneinander völlig unabhängig ablaufen. So können beispielsweise zwei Betriebsfälle, insbesondere Notfälle, gleichzeitig eintreten, die durch zwei unterschiedliche Gruppen Computern zur selben Zeit behandelt werden. Der Ablaufplan des Teststeuerprogramms 20 kann somit zwei gleichzeitig ablaufende Szenarien vorsehen, wobei überprüft wird, ob das Netzwerk insgesamt eine solche Auslastung verarbeiten kann und ob es zu unbeabsichtigten Wechselwirkungen zwischen den beiden an sich voneinander unabhängigen Szenarien kommt.

In realen Situationen ist es jedoch möglich, dass sich während der Interaktion bestimmte Parameter wie beispielsweise die Aufmerksamkeit des Benutzers, die Qualität der Datenübertragung, usw. ändern. Eine solche Änderung wird typischerweise von Testsystemen nicht berücksichtigt.

Im Folgenden wird eine Weiterbildung einer erfindungsgemäßen Ausführungsform dargestellt, die eine flexiblere Funktionalität aufweist. Wie bereits erwähnt, weisen die einzelnen Steuerprogramme 31, 32, 33 jeweils eine Schnittstelle auf, die die Steuerung des zu überprüfenden Programms 21 ermöglicht. Diese Schnittstelle wurde bei der zuvor dargestellten Ausführungsform der Erfindung als vorab vorgegeben beschrieben, wobei jeweils eine bestimmte Anzahl von Befehlen vom jeweiligen Steuerprogramm vorgegeben ist.

Bei der folgenden Ausführungsform besteht die Möglichkeit, die Schnittstelle sowie die Implementierung der einzelnen Befehle zur Ansteuerung des jeweiligen Programms 21, 22, 23 zur Laufzeit zu verändern. Zu diesem Zweck wird beim Start des Testlaufs in dem als "ROLL OUT" bezeichneten ersten Schritt ein erstes Schnittstellenprogramm zur Implementierung der Schnittstelle an das Steuerprogramm 31, 32, 33 übermittelt und von diesem zur Verfügung gehalten. Wenn vom Teststeuerprogramm 20 ein Aufruf an das jeweilige Steuerprogramm 31, 32, 33 ergeht, wird je nach Art des Befehls das vom ersten Schnittstellenprogramm festgelegte Vorgehen durchgeführt.

So kann beispielsweise das erste Schnittstellenprogramm die Vorgehensweise eines fehlerfreien Benutzers in einer Einsatzzentrale nachbilden. Langen beim Computer 11, 12, 13 dieses Benutzers bestimmte Meldungen ein, so reagiert dieser mit geringer Verzögerung und fehlerfrei auf die jeweilige Situation und setzt jeweils die korrekten Handlungen.

Da reale Benutzer in der Regel eine, wenn auch geringe, Fehlerquote zeigen, ist eine Simulation, die eine vollkommen fehlerfreie Bedienung durchführt, nur bedingt aussagekräftig.

Um eine solche Situation besser testen zu können, kann beispielsweise anstelle eines fehlerfreien ersten Schnittstellenprogramms ein teilweise fehlerbehaftetes zweites Schnittstellenprogramm zum jeweiligen Steuerprogramm übertragen werden. Dieses zweite Schnittstellenprogramm weist Befehlsroutinen auf, die nicht vollkommen fehlerfrei sind, sondern mitunter auch eine geringfügige Fehlbedienung des Systems vornehmen. So kann beispielsweise der vom Zentralcomputer 10 erstellte Befehl "Alarmiere drei Fahrzeuge der Feuerwehr" beispielsweise auch so umgesetzt werden, dass nicht drei sondern dreizehn Fahrzeuge alarmiert werden oder dass anstelle der Feuerwehr die Rettung alarmiert wird. Um dieses teilweise fehlerhafte Vorgehen zu gewährleisten, weist das zweite Schnittstellenprogramm Befehlsroutinen zur Abarbeitung der Befehle auf, die bewusst fehlerhaft implementiert sind nach dem Zufallsprinzip mit einer bestimmten Wahrscheinlichkeit eine fehlerhafte Reaktion zeigen.
Eine fehlerhafte Reaktion muss nicht zwingend in einer falschen Weitergabe von Informationen liegen, sondern kann auch in einer Fehlbedienung der graphischen Benutzerschnittstelle liegen, die anschließend durch mehrmalige Betätigung von Bedienelementen rückgängig gemacht wird. Bei einer solchen fehlerhaften Reaktion kann beispielsweise geprüft werden, wie kritisch die, wenn auch kurzfristige, fehlerhafte Programmbedienung durch den Benutzer ist.

Ein Bereitstellen eines zweiten Schnittstellenprogrammes kann aber auch dazu verwendet werden, um für die Testdurchführung die Möglichkeiten einer Interaktion mit dem Computerprogram um zusätzliche Befehle zu erweitern.

In der vorliegenden Ausführungsform sind das erste und das zweite Schnittstellenprogramm in Form einer Skriptsprache implementiert. Die einzelnen Befehlsroutinen, die bei Vorliegen der vom Zentralcomputer 10 stammenden Befehle abgearbeitet werden, liegen in einer vorab für den Zentralcomputer 10 und die Computern 11, 12, 13 festgelegten Skriptsprache vor.

Das erste Schnittstellenprogramm umfassend die jeweiligen Befehlsroutinen kann zu beliebigen Zeitpunkten während der Ausführung des Tests im laufenden Betrieb der zu überprüfenden Computerprogramme durch ein zweites oder drittes Schnittstellenprogramm ausgetauscht werden. Hierfür übermittelt der Zentralcomputer 10 das jeweilige zweite oder dritte Schnittstellenprogramm in Form eines Skripts an den jeweiligen Computer 11, 12, 13. Nachdem der Computer 11, 12, 13 sein bisheriges erstes Schnittstellenprogramm durch das an ihn übertragene Schnittstellenprogramm ersetzt hat, werden die einzelnen vom Zentralcomputer 10 übermittelten Befehle fortan durch das neue, zweite oder dritte Schnittstellenprogramm interpretiert und die Befehlsroutinen des jeweiligen neuen zweiten oder dritten Schnittstellenprogramms aufgerufen. Das jeweilige zu prüfende Programm 21, 22, 23 wird mittels der Befehlsroutinen des neuen zweiten oder dritten Schnittstellenprogramms angesteuert.

Es ist darüber hinaus auch möglich, während der Testdurchführung einzelne SoftwareKomponenten wie beispielsweise Computerprogramme 21, 22, 23 oder Steuerprogramme auf den einzelnen Computern 11, 12, 13 zu installieren oder diese von den Computern wieder zu deinstallieren. Hierdurch besteht der wesentliche Vorteil, dass der jeweilige Computer 11, 12, 13 zu unterschiedlichen Zwecken im Rahmen der verteilten Testszenarien genutzt werden kann und rasch eine Modifikation des jeweils zu testenden Systems vorgenommen werden kann.
Zudem ist es möglich, einzelne Computerprogramme 21, 22, 23 während der Testdurchführung in ihrer Funktionsweise gezielt zu beeinträchtigen bzw. auch aus dem Computernetzwerk zu nehmen oder weitere Programme ins Netzwerk aufzunehmen, um im Zug der verteilten Testdurchführung im Computernetzwerk z.B. Failover-Szenarien innerhalb Gruppen von Computerprogrammen im Netzwerk zu überprüfen (Datensynchronisation im Computernetzwerk im Falle von Ausfällen einzelner Computerprogramme/Systemkomponenten).
Ebenso ist die Verteilung von Testszenarien auf einer dynamisch veränderbaren Anzahl von zusammenhängenden Computerprogrammen möglich um deren Auswirkung auf das gesamte verteilte System/Computernetzwerk zu überprüfen.

## Patentansprüche

1. Verfahren zur Überprüfung einer Anzahl von auf einem Computersystem zusammenwirkenden Computerprogrammen (21, 22, 23) auf Programmfehler, wobei das Computersystem eine Anzahl von zu überprüfenden, miteinander, insbesondere über ein Netzwerk (40), in Datenverbindung stehenden Computern (11, 12, 13) aufweist, auf denen jeweils zumindest eines der zu überprüfenden Computerprogramme (21, 22, 23) installiert ist und abläuft,
- wobei das Computersystem mit zumindest einem Zentralcomputer (10), auf dem ein Teststeuerprogramm (20) ausgeführt wird, derart in Verbindung steht, dass jeder Computer (11, 12, 13) mit dem Zentralcomputer (10) in Datenverbindung steht,
- wobei auf jedem der Computer (11, 12, 13) jeweils ein Steuerungsprogramm (31, 32, 33) ausgeführt wird, wobei vom Steuerungsprogramm (31, 32, 33)
- bei Einlangen eines Steuersignals (51, 52, 53) aus einer, insbesondere zur Laufzeit veränderbaren, Menge von durch das jeweilige Computerprogramm (21, 22, 23) verarbeitbaren Steuersignalen (51, 52, 53) eine durch das jeweilige Steuersignal (51, 52, 53) vorgegebene Programmaktion vorgenommen wird, die vorzugsweise einer beim Ablauf des Computerprogramms (21, 22, 23), insbesondere vom Benutzer, vornehmbaren oder auslösbaren Programmaktion entspricht, und
- auf Anfrage (54, 55) der jeweilige Zustand des Computers (11, 12, 13) sowie des Computerprogramms (21, 22, 23) in Form einer Meldung (58, 59) an den Zentralcomputer (10) übermittelt wird,
- wobei Steuersignale (51, 52, 53) aus einer, insbesondere zur Laufzeit veränderbaren, Menge von durch das jeweilige Computerprogramm (11, 12, 13) verarbeitbaren Steuersignalen (51, 52, 53) vom Zentralcomputer (10) an die einzelnen Computer (11, 12, 13) jeweils, insbesondere in einer vorgegebenen Reihenfolge, übermittelt werden, sodass entsprechend dieser Steuersignale (51, 52, 53) bei dem Computerprogramm (21, 22, 23) des jeweiligen Computers (11, 12, 13) Programmaktionen vorgenommen werden,
- dass vom Zentralcomputer (10) im Anschluss an die Übermittlung der Steuersignale (51, 52, 53) der jeweilige Zustand eines oder mehrerer Computer (11, 12, 13) abgefragt wird und der Zustand mit vorab vorgegebenen Sollwerten verglichen wird, wobei insbesondere der weitere Ablauf des Teststeuerprogramms (20) von der Überprüfung dieses Zustands abhängt und/oder bei je nach ermitteltem Zustand jeweils ein diesem Zustand zugeordneter Programmteil des Teststeuerprogramms (20) ausgeführt wird, und
- wobei bei einem positiven Vergleichsergebnis die Computerprogramme (21, 22, 23) als korrekt hinsichtlich eines möglichen Programmfehlers identifiziert werden,
**dadurch gekennzeichnet, dass** vom Zentralcomputer (10) ein Steuersignal an das Steuerprogramm (31, 32, 33) eines Computers (11, 12, 13) übermittelt wird, das dessen Programm (21, 22, 23) zu einer Programmaktion veranlasst, mit der Daten von diesem Computer (11, 12, 13) an einen weiteren Computer (11, 12, 13) übertragen werden, und dass anschließend der Zustand dieses weiteren Computers (11, 12, 13) oder des auf diesem weiteren Computer (11, 12, 13) ablaufenden Programms (21, 22, 23) vom Zentralcomputer (10) abgefragt wird, und dass anhand des so ermittelten Zustands überprüft wird, ob die vom Computer (11, 12, 13) zum weiteren Computer (11, 12, 13) übermittelten Daten tatsächlich ordnungsgemäß von diesem empfangen und/oder verarbeitet worden sind.

2. Verfahren nach Anspruch 1, **dadurch gekennzeichnet, dass** einer der Computer (11, 12, 13) mit einem Steuersignal (51, 52, 53) beaufschlagt und damit zur Übermittlung von Daten oder Informationen an zumindest einen weiteren Computer (11, 12, 13) veranlasst wird, und dass der Zustand zumindest dieses weiteren Computers (11, 12, 13) oder des auf diesem Computer (11, 12, 13) ausgeführten Computerprogramms (21, 22, 23), insbesondere vom Zentralcomputer (10), abgefragt wird, wobei insbesondere an diesen weiteren Computer (11, 12, 13) im Zuge der Überprüfung noch kein Steuersignal (51, 52, 53) übermittelt wurde.

3. Verfahren nach Anspruch 1 oder 2, **dadurch gekennzeichnet, dass** das jeweilige Computerprogramm (21, 22, 23) über eine graphische Bedienerschnittstelle umfassend eine Vielzahl von mit einer Tastatur oder einer Maus betätigbaren Schaltfeldern verfügt, wobei dem Steuerungsprogramm (31, 32, 33) für das ihm zugeordnete Computerprogramm (21, 22, 23) eine Anzahl von bei der Bedienung des Programms vom Benutzer vornehmbaren oder auslösbaren Interaktionen für die einzelnen Schaltfelder vorgegeben werden, die bei Einlangen eines der Interaktion zugeordneten Steuersignals (51, 52, 53) ausgeführt werden.

4. Verfahren nach Anspruch 3, **dadurch gekennzeichnet, dass** das Steuerungsprogramm (31, 32, 33) bei Vorliegen eines Steuersignals (51, 52, 53) Interaktionen mit dem Computerprogramm (21, 22, 23) vornimmt, die bei dem zu steuernden Computerprogramm (21, 22, 23) das Klicken oder das Ziehen eines Schaltfelds mit der Maus oder die Tastatureingabe von Zeichen in das jeweilige Schaltfeld bewirkt.

5. Verfahren nach einem der vorangehenden Ansprüche, **dadurch gekennzeichnet, dass** das Computerprogramm (21, 22, 23) sowie das Steuerungsprogramm (31, 32, 33) vor oder während der Durchführung der Überprüfung vom Zentralcomputer (10) auf den jeweiligen Computer (11, 12, 13) übertragen, auf diesem abgespeichert, gestartet, für die Interaktion vorbereitet und/oder in einen bestimmten Zustand gebracht werden

6. Verfahren nach einem der vorangehenden Ansprüche, **dadurch gekennzeichnet, dass** das Computerprogramm (21, 22, 23) sowie das Steuerungsprogramm (31, 32, 33) während oder nach der Überprüfung durch den Zentralcomputer (10) gestoppt werden und/oder dass das Computerprogramm (21, 22, 23) vom Speicher des jeweiligen Computers (11, 12, 13) gelöscht wird.

7. Verfahren nach einem der vorangehenden Ansprüche, **dadurch gekennzeichnet, dass** die Computer (11, 12, 13) vor der Durchführung der Überprüfung gemäß ihrem zu prüfenden Einsatzzweck miteinander in Datenverbindung gebracht werden und dass zumindest ein Zentralcomputer (10) mit allen Computern (11, 12, 13) des Netzwerks (40) in Datenverbindung gebracht wird.

8. Verfahren nach einem der vorangehenden Ansprüche, **dadurch gekennzeichnet,**
- **dass** vom Zentralcomputer (10) an die Computer (11, 12, 13) ein Schnittstellenprogramm umfassend eine Anzahl von jeweils einem Befehl zugeordneten Befehlsroutinen übermittelt wird, wobei die einzelnen Befehlsroutinen zur Steuerung des zu prüfenden Programms (21, 22, 23) ausgebildet sind, und
- **dass** das Steuerprogramm (31, 32, 33) des jeweiligen Computers (11, 12, 13) bei Übermittlung des jeweiligen Befehls die dem jeweiligen Befehl zugeordnete Befehlsroutine des Schnittstellenprogramms ausführt und demgemäß das zu prüfende Programm (21, 22, 23) ansteuert und Programmaktionen des zu steuernden Programms auslöst.

9. Verfahren nach Anspruch 8, **dadurch gekennzeichnet, dass** das Schnittstellenprogramm vor der Übermittlung eines Befehls vom Zentralcomputer (10) an die Computer (11, 12, 13), und gegebenenfalls auch vor der Übermittlung weiterer Befehle, vom Zentralcomputer (10) an einen oder mehrere der Computer (11, 12, 13) übertragen wird.

10. Computersystem umfassend eine Anzahl von miteinander, insbesondere über ein Netzwerk (40), in Datenverbindung stehenden Computern (11, 12, 13), auf denen jeweils ein Computerprogramm (11, 12, 13) installiert ist,
- wobei zumindest ein mit allen Computern (11, 12, 13) in Datenverbindung stehender Zentralcomputer (10), auf dem ein Teststeuerprogramm (20) abläuft, vorgesehen ist,
- dass auf jedem der Computer (11, 12, 13) jeweils ein Steuerungsprogramm (31, 32, 33) abgespeichert ist, das, wenn es auf dem Computer (11, 12, 13) ausgeführt wird,
- bei Einlangen eines Steuersignals (51, 52, 53) aus einer, insbesondere zur Laufzeit veränderbaren, Menge von durch das jeweilige Computerprogramm (11, 12, 13) verarbeitbaren Steuersignalen (51, 52, 53) vorgegebene Programmaktion vornimmt, die vorzugsweise einer beim Ablauf des Computerprogramms (21, 22, 23), insbesondere vom Benutzer, vornehmbaren oder auslösbaren Programmaktionen entspricht,
- wobei der Zentralcomputer (10) jeweils, insbesondere in einer vorgegebenen Reihenfolge, Steuersignale (51, 52, 53) an die Computer (11, 12, 13) übermittelt, sodass entsprechend dieser Steuersignale (51, 52, 53) das Computerprogramm (21, 22, 23) des jeweiligen Computers (11, 12, 13) betätigt wird,
- wobei der Zentralcomputer (10) bei der Ausführung des Teststeuerungsprogramms (20) im Anschluss an die Übermittlung der Steuersignale (51, 52, 53) den jeweiligen Zustand eines oder mehrerer Computer (11, 12, 13) abfragt und den Zustand mit vorab vorgegebenen Sollwerten vergleicht, wobei insbesondere der weitere Ablauf des Teststeuerprogramms (20) von der Überprüfung dieses Zustands abhängt und/oder der Zentralcomputer (10) je nach ermitteltem Zustand jeweils einen diesem Zustand zugeordneten Programmteil des Teststeuerprogramms (20) ausführt, und
- wobei der Zentralcomputer (10) bei der Ausführung des Teststeuerungsprogramms (20) bei einem positiven Vergleichsergebnis die Computerprogramme (21, 22, 23) als korrekt hinsichtlich eines möglichen Programmfehlers identifiziert
**dadurch gekennzeichnet, dass**
der Zentralcomputer (10) ein Steuersignal an das Steuerprogramm (31, 32, 33) eines Computers (11, 12, 13) übermittelt, das dessen Programm (21, 22, 23) zu einer Interaktion veranlasst, mit der Daten von diesem Computer (11, 12, 13) an einen weiteren Computer (11, 12, 13) übertragen werden, und dass der Zentralcomputer (10) anschließend der Zustand dieses weiteren Computers (11, 12, 13) oder des auf diesem weiteren Computer (11, 12, 13) ablaufenden Programms (21, 22, 23) vom Zentralcomputer (10) abfragt, und anhand des so ermittelten Zustands überprüft, ob die vom Computer (11, 12, 13) zum weiteren Computer (11, 12, 13) übermittelten Daten tatsächlich an diesen übermittelt wurden.

11. Computersystem nach Anspruch 10, **dadurch gekennzeichnet, dass** der Zentralcomputer (10) bei der Ausführung des Teststeuerungsprogramms (20) einen der Computer (11, 12, 13) mit einem Steuersignal (51, 52, 53) beaufschlagt und zur Übermittlung von Daten oder Informationen an zumindest einen weiteren Computer (11, 12, 13) veranlasst, und insbesondere den Zustand zumindest dieses weiteren Computers (11, 12, 13) oder des auf diesem weiteren Computer (11, 12, 13) ausgeführten Computerprogramms (21, 22, 23) abfragt, wobei der Zentralcomputer (10) an diesen weiteren Computer im Zuge der Prüfung zuvor noch kein Steuersignal (51, 52, 53) übermittelt hat.

12. Computersystem nach Anspruch 10 oder 11, **dadurch gekennzeichnet, dass** das jeweilige Computerprogramm (21, 22, 23) über eine graphische Bedienerschnittstelle umfassend eine Vielzahl von mit einer Tastatur oder einer Maus betätigbaren Schaltfeldern verfügt, wobei das Steuerprogramm (31, 32, 33) bei Einlangen eines vorgegebenen Steuersignals (51, 52, 53), das einer vom Benutzer vornehmbaren oder auslösbaren Interaktion mit einem der Schaltfelder entspricht, die jeweilige Interaktion beim zu steuernden Computerprogramm (21, 22, 23) veranlasst.

13. Computersystem nach Anspruch 12, **dadurch gekennzeichnet, dass** das Steuerungsprogramm (31, 32, 33) Interaktionen zur Verfügung hält, die bei dem zu steuernden Computerprogramm (21, 22, 23) das Klicken oder das Ziehen eines Schaltfelds mit der Maus oder eine Tastatureingabe von Zeichen in das jeweilige Schaltfeld bewirkt.

14. Computersystem nach einem der Ansprüche 10 bis 13, **dadurch gekennzeichnet,**
- **dass** der Zentralcomputer (10) vor oder während der Ausführung des Teststeuerungsprogramms (20) das Computerprogramm (21, 22, 23) sowie das Steuerungsprogramm (31, 32, 33) auf den jeweiligen Computer (11, 12, 13) überträgt, auf diesem abspeichert und/oder dessen Ausführung veranlasst und/oder das Computerprogramm (21, 22, 23) für die Vornahme weiterer Interaktionen zur Verfügung hält

15. Computersystem nach einem der Ansprüche 10 bis 14, **dadurch gekennzeichnet,**
- **dass** der Zentralcomputer (10) während oder nach der Ausführung des Teststeuerprogramms (20) das Computerprogramm (21, 22, 23) sowie das Steuerungsprogramm (31, 32, 33) nach der Überprüfung beendet und/oder das Computerprogramm (21, 22, 23) vom Speicher des jeweiligen Computers (11, 12, 13) löscht.

16. Computersystem nach einem der Ansprüche 10 bis 15 **dadurch gekennzeichnet, dass** die Computer (11, 12, 13) bei der Durchführung der Überprüfung gemäß ihrem Einsatzzweck miteinander in Datenverbindung stehen und dass zumindest ein Zentralcomputer (10) mit allen Computern (11, 12, 13) des Netzwerks (40) in Datenverbindung steht.

17. Datenträger, auf dem ein Teststeuerprogramm (20) zur Durchführung eines Verfahrens gemäß einem der Ansprüche 1 bis 9 auf dem Zentralcomputer (10) abgespeichert ist.

18. Datenträger, auf dem ein Steuerungsprogramm (31, 32, 33) zur Durchführung eines Verfahrens gemäß einem der Ansprüche 1 bis 9 auf dem Computer (11, 12, 13) abgespeichert ist.

## Claims

1. The invention relates to a method for checking a plurality of computer programs interacting on a computer system (21, 22, 23) for program errors, wherein the computer system has a plurality of computers (11, 12, 13) to be checked which have a data connection with one another, in particular via a network (40), on each of which at least one of the computer programs (21, 22, 23) to be checked is installed and runs,
- wherein the computer system is connected to at least one central computer (10) on which a test control program (20) is executed such that each computer (11, 12, 13) has a data connection with the central computer (10),
- wherein on each of the computers (11, 12, 13), in each case, a control program (31, 32, 33) is executed, wherein
- when a control signal (51, 52, 53) from a set of control signals (51, 52, 53) which can be processed by the respective computer programs (21, 22, 23) is received, said set of control signals being in particular variable at runtime, a program action predetermined by the control signal (51, 52, 53) is carried out by the control program (31, 32, 33), said program action preferably corresponding to a program action which can be carried out or initiated, in particular by the user, while the computer program (21, 22, 23) runs, and
- on request (54, 55), the state of the computer (11, 12, 13) and of the computer program (21, 22, 23) is sent to the central computer (10) in the form of a message (58, 59),
- wherein control signals (51, 52, 53) from a set of control signals (51, 52, 53) which can be processed by the respective computer programs (11, 12, 13), said set of control signals being in particular variable at runtime, are transmitted, in particular in a predetermined sequence, from the central computer (10) to the individual computers (11, 12, 13) so that program actions are carried out in the case of the computer programs (21, 22, 23) of the respective computers (11, 12, 13) according to said control signals (51, 52, 53),
- following the transmission of the control signals (51, 52, 53), the respective states of one or more computers (11, 12, 13) are requested by the central computer (10), and the states are compared with setpoint values predetermined beforehand, wherein in particular the further running of the test control program (20) depends on the checking of said states, and/or, depending on the determined state in each case, a program part of the test control program (20) is executed, and
- wherein, in the case of a positive comparison result, the computer programs (21, 22, 23) are identified as being correct with respect to a possible program error,
**characterised in that** a control signal is transmitted from the central computer (10) to the control program (31, 32, 33) of a computer (11, 12, 13), which causes the program (21, 22, 23) thereof to carry out a program action, by means of which data are transmitted from said computer (11, 12, 13) to a further computer (11, 12, 13), and that the state of said further computer (11, 12, 13) or of the program (21, 22, 23) running on said further computer (11, 12, 13) is then requested by the central computer (10), and on the basis of the state determined in this way it is checked as to whether the data transmitted from the computer (11, 12, 13) to the further computer (11, 12, 13) have actually been correctly received and/or processed by said computer.

2. The method according to claim 1, **characterised in that** one of the computers (11, 12, 13) is supplied with a control signal (51, 52, 53) and in this way is caused to transmit data or information to at least one further computer (11, 12, 13), and that the state of at least said further computer (11, 12, 13) or of the computer program (21, 22, 23) executed on said computer (11, 12, 13) is requested, in particular by the central computer (10), wherein no control signal (51, 52, 53) has been transmitted in particular to said further computer (11, 12, 13) in the course of the check.

3. The method according to claim 1 or 2, **characterised in that** the computer program (21, 22, 23) has a graphical user interface comprising a plurality of control elements which can be actuated by means of a keyboard or a mouse, wherein the control program (31, 32, 33) for the computer program (21, 22, 23) associated therewith is prescribed a plurality of interactions for the individual control elements which can be carried out or initiated by the user when operating the program, said interactions being executed when a control signal (51, 52, 53) associated with the interaction is received.

4. The method according to claim 3, **characterised in that** when there is a control signal (51, 52, 53), the control program (31, 32, 33) performs interactions with the computer program (21, 22, 23), which for the computer program (21, 22, 23) to be controlled are produced by clicking or dragging a control element by means of the mouse or by the keyboard input of characters in a control element.

5. The method according to one of the preceding claims, **characterised in that** the computer programs (21, 22, 23) and the control programs (31, 32, 33) before or while the check is carried out by the central computer (10) are transferred to the respective computers (11, 12, 13), stored and started thereon, prepared for the interaction and/or brought into a certain state.

6. The method according to one of the preceding claims, **characterised in that** the computer programs (21, 22, 23) and the control programs (31, 32, 33) during or after the check by the central computer (10) are stopped and/or that the computer programs (21, 22, 23) are deleted from the memory of the respective computers (11, 12, 13).

7. The method according to one of the preceding claims, **characterised in that** the computers (11, 12, 13) are brought into data connection with one another before the check is carried out according to the intended purpose thereof to be tested, and that at least one central computer (10) is brought into data connection with all the computers (11, 12, 13) of the network (40).

8. The method according to one of the preceding claims, **characterised in that**
- an interface program comprising a plurality of command routines each associated with a command is transmitted from the central computer (10) to the computers (11, 12, 13), wherein the individual command routines are configured for controlling the program (21, 22, 23) to be tested, and
- that the control program (31, 32, 33) of the computer (11, 12, 13), when a command is transmitted, executes the command routine of the interface program, said command routine being associated with the command, and, accordingly, actuates the program (21, 22, 23) to be tested and initiates program actions of the program to be controlled.

9. The method according to claim 8, **characterised in that** the interface program , before transmission of a command from the central computer (10) to the computers (11, 12, 13), and optionally also before the transmission of further commands, is transmitted from the central computer (10) to one or more of the computers (11, 12, 13).

10. The computer system comprising a plurality of computers (11, 12, 13) which are in data connection with one another, in particular via a network (40), and on which in each case a computer program (11, 12, 13) is installed,
- wherein at least one central computer (10) is provided which is in data connection with all the computers (11, 12, 13) and on which a test control program (20) runs,
- a control program (31, 32, 33) is stored in each case on each of the computers (11, 12, 13), which, when executed on the computer (11, 12, 13),
- when a control signal (51, 52, 53) from a set of control signals (51, 52, 53) which can be processed by the respective computer programs (11, 12, 13) is received, said set of control signals being in particular variable at runtime, carries out a predetermined program action, which preferably corresponds to program actions which can be carried out or initiated, in particular by the user, while the computer program (21, 22, 23) runs,
- wherein the central computer (10), in each case, transmits control signals (51, 52, 53) to the computers (11, 12, 13), in particular in a predetermined sequence so that the computer programs (21, 22, 23) of the respective computers (11, 12, 13) are actuated according to said control signals (51, 52, 53),
- wherein the central computer (10), when executing the test control program (20), following the transmission of the control signals (51, 52, 53), requests the respective states of one or more computers (11, 12, 13) and compares the states with predetermined setpoint values, wherein in particular the further running of the test control program (20) depends on the checking of said states, and/or the central computer (10), depending on the determined state in each case, executes a program part of the test control program (20) associated with said state, and
- wherein the central computer (10), when executing the test control program (20), in the case of a positive comparison result, identifies the computer programs (21, 22, 23) as being correct in respect of a possible program error,
**characterised in that**
the central computer (10) transmits a control signal to the control program (31, 32, 33) of a computer (11, 12, 13), which signal causes an interaction of the program (21, 22, 23) thereof, by means of which interaction data are transmitted from said computer (11, 12, 13) to a further computer (11, 12, 13), and that the central computer (10) then requests the state of said further computer (11, 12, 13) or of the program (21, 22, 23) running on said further computer (11, 12, 13) from the central computer (10), and a check is made on the basis of the state determined in this way as to whether the data transmitted by the computer (11, 12, 13) to the further computer (11, 12, 13) have actually been transmitted to said further computers.

11. The computer system according to claim 10, **characterised in that** the central computer (10) during the execution of the test control program (20) supplies one of the computers (11, 12, 13) with a control signal (51, 52, 53) and causes said computer to transmit data or information to at least one further computer (11, 12, 13), and in particular requests the state of at least said further computer (11, 12, 13) or of the computer program (21, 22, 23) executed on said further computer (11, 12, 13), wherein the central computer (10) has not yet transmitted a control signal (51, 52, 53) beforehand to said further computer in the course of the test.

12. The computer system according to claim 10 or 11, **characterised in that** the computer program (21, 22, 23) has a graphical user interface comprising a plurality of control elements that can be actuated by a keyboard or a mouse, wherein the control program (31, 32, 33), when a predetermined control signal (51, 52, 53) is received, corresponding to an interaction with one of the control elements which can be carried out or initiated by the user, causes an interaction in the computer program (21, 22, 23) to be controlled.

13. The computer system according to claim 12, **characterised in that** the control program (31, 32, 33) provides interactions which for the computer program (21, 22, 23) to be controlled are produced by clicking or dragging a control element by means of the mouse or by a keyboard input of characters into a control element.

14. The computer system according to one of claims 10 to 13, **characterised in that**
- the central computer (10), before or during the execution of the test control program (20), transmits the computer program (21, 22, 23) and the control program (31, 32, 33) to a computer (11, 12, 13), stores it on same and/or causes the execution thereof and/or provides the computer program (21, 22, 23) for carrying out further interactions.

15. The computer system according to one of claims 10 to 14, **characterised in that**
- the central computer (10), during or after the execution of the test control program (20), terminates the computer program (21, 22, 23) and the control program (31, 32, 33) after the check and/or deletes the computer programs (21, 22, 23) from the memory of the respective computers (11, 12, 13).

16. The computer system according to one of claims 10 to 15, **characterised in that** the computers (11, 12, 13), when carrying out the check according to the intended purpose thereof, are in data connection with one another, and that at least one central computer (10) is in data connection with all the computers (11, 12, 13) of the network (40).

17. The data carrier, on which a test control program (20) for carrying out a method according to one of claims 1 to 9, is stored on the central computer (10).

18. The data carrier, on which a control program (31, 32, 33) for carrying out a method according to one of claims 1 to 9, is stored on the computer (11, 12, 13).

## Revendications

1. Procédé de vérification d'un certain nombre de programmes informatiques (21, 22, 23) coopérant sur un système informatique, à la recherche d'erreur de programme, dans lequel le système informatique présente un certain nombre d'ordinateurs (11, 12, 13) à vérifier, reliés les uns aux autres par une connexion de données, en particulier par le biais d'un réseau (40), sur lesquels respectivement au moins un des programmes informatiques (21, 22, 23) à vérifier est installé et exécuté,
- dans lequel le système informatique est en connexion avec au moins un ordinateur central (10), sur lequel un programme de commande test (20) est exécuté, de sorte que chaque ordinateur (11, 12, 13) soit relié par une connexion de données avec l'ordinateur central (10),
- dans lequel sur chacun des ordinateurs (11, 12, 13) respectivement un programme de commande (31, 32, 33) est exécuté, dans lequel, depuis le programme de commande (31, 32, 33)
- lors de l'arrivée d'un signal de commande (51, 52, 53) parmi une quantité en particulier modifiable au moment de l'exécution de signaux de commande (51, 52, 53) pouvant être traités par le programme informatique (21, 22, 23) respectif, une action de programme prédéfinie par le signal de commande respectif (51, 52, 53) est entreprise, qui correspond de préférence à une action de programme pouvant être entreprise ou déclenchée en particulier par l'utilisateur lors de l'exécution du programme informatique (21, 22, 23) et
- sur demande (54, 55), l'état respectif de l'ordinateur (11, 12, 13) ainsi que du programme informatique (21, 22, 23) est transmis sous la forme d'un message (58, 59) à l'ordinateur central (10),
- dans lequel les signaux de commande (51, 52, 53) parmi une quantité en particulier modifiable au moment de l'exécution de signaux de commande (51, 52, 53) pouvant être traités par le programme informatique (11, 12, 13) respectif sont transmis par l'ordinateur central (10) aux ordinateurs individuels (11, 12, 13) respectivement, notamment dans un ordre prédéfini de sorte que, de façon correspondante à ces signaux de commande (51, 52, 53), des actions de programme soient entreprises par le programme informatique (21, 22, 23) de l'ordinateur respectif (11, 12, 13),
- de sorte que, depuis l'ordinateur central (10) à la suite de la transmission des signaux de commande (51, 52, 53), l'état respectif d'un ou de plusieurs ordinateurs (11, 12, 13) soit demandé et l'état soit comparé à des valeurs de consigne prédéfinies, dans lequel, notamment, la poursuite du programme de commande test (20) dépend de la vérification de cet état et/ou dans lequel selon l'état déterminé, une partie de programme du programme de commande test (20) associée à cet état est réalisée et
- dans lequel, en cas de résultat de comparaison positif, les programmes informatiques (21, 22, 23) sont identifiés comme corrects concernant une erreur éventuelle de programme,
**caractérisé en ce que** depuis l'ordinateur central (10) un signal de commande est transmis au programme de commande (31, 32, 33) d'un ordinateur (11, 12, 13), qui incite ce programme (21, 22, 23) à effectuer une action de programme, selon laquelle des données de cet ordinateur (11, 12, 13) sont transmises à un autre ordinateur (11, 12, 13) et **en ce qu'**ensuite l'état de cet autre ordinateur (11, 12, 13) ou du programme (21, 22, 23) exécuté sur cet autre ordinateur (11, 12, 13) est interrogé par l'ordinateur central (10) et **en ce que**, à l'aide de l'état ainsi déterminé, une vérification est effectuée pour savoir si les données transmises par l'ordinateur (11, 12, 13) à l'autre ordinateur (11, 12, 13) ont été réellement reçues et/ou traitées de façon convenable.

2. Procédé selon la revendication 1, **caractérisé en ce qu'**un des ordinateurs (11, 12, 13) est atteint par un signal de commande (51, 52, 53) et ainsi incité à la transmission de données ou d'informations à au moins un autre ordinateur (11, 12, 13) et **en ce que** l'état, au moins, de cet autre ordinateur (11, 12, 13) ou du programme informatique (21, 22, 23) exécuté sur cet ordinateur (11, 12, 13), est interrogé notamment par l'ordinateur central (10), dans lequel aucun signal de commande (51, 52, 53) n'a encore été transmis notamment à cet autre ordinateur (11, 12, 13) à la suite de la vérification.

3. Procédé selon la revendication 1 ou 2, **caractérisé en ce que** le programme informatique respectif (21, 22, 23) dispose d'une interface utilisateur graphique comprenant une pluralité de champs pouvant être actionnés avec un clavier ou une souris, dans lequel un certain nombre d'interactions pouvant être effectuées par l'utilisateur ou déclenchées par l'utilisation du programme sont prédéfinies pour les champs individuels pour le programme de commande (31, 32, 33) pour le programme informatique (21, 22, 23) qui lui est attribué, qui sont exécutées lors de l'arrivée d'un signal de commande (51,52, 53) associé à l'interaction.

4. Procédé selon la revendication 3, **caractérisé en ce que** le programme de commande (31, 32, 33), en présence d'un signal de commande (51, 52, 53), entreprend des interactions avec le programme informatique (21, 22, 23), qui sont provoquées, sur le programme informatique à commander (21, 22, 23) par un clic ou un glissement du champ avec la souris ou l'entrée avec le clavier de signes dans le champ respectif.

5. Procédé selon une des revendications précédentes, **caractérisé en ce que** le programme informatique (21, 22, 23) ainsi que le programme de commande (31, 32, 33) avant ou pendant la réalisation de la vérification par l'ordinateur central (10) sont transmis sur l'ordinateur respectif (11, 12, 13), mémorisés sur celui-ci, lancés, préparés pour l'interaction et/ou amenés dans un état défini.

6. Procédé selon une des revendications précédentes, **caractérisé en ce que** le programme informatique (21, 22, 23) ainsi que le programme de commande (31, 32, 33), pendant ou après la vérification par l'ordinateur central (10), sont arrêtés et/ou **en ce que** le programme informatique (21, 22, 23) est effacé de la mémoire de l'ordinateur respectif (11, 12, 13).

7. Procédé selon une des revendications précédentes, **caractérisé en ce que** les ordinateurs (11, 12, 13) sont placés en connexion de données les uns avec les autres avant la réalisation de la vérification conformément à leur type d'utilisation à vérifier et **en ce qu'**au moins un ordinateur central (10) est placé en connexion de données avec tous les ordinateurs (11, 12, 13) du réseau (40).

8. Procédé selon une des revendications précédentes, **caractérisé**
- **en ce qu'**un programme d'interface est transmis, depuis l'ordinateur central (10) aux ordinateurs (11, 12, 13) comprenant un certain nombre de routines de commande attribuées respectivement à une commande, dans lequel les routines de commande individuelles sont conçues pour la commande du programme (21, 22, 23) à vérifier et
- **en ce que** le programme de commande (31, 32, 33) de l'ordinateur respectif (11, 12, 13) exécute la routine de commande attribuée à la commande respective du programme d'interface lors de la transmission de la commande respective et commande en conséquence le programme (21, 22, 23) à vérifier et déclenche les actions de programme du programme à commander.

9. Procédé selon la revendication 8, **caractérisé en ce que** le programme d'interface est transmis, avant la transmission d'une commande de l'ordinateur centrale (10) aux ordinateurs (11, 12, 13) et le cas échéant également avant la transmission d'autres commandes, de l'ordinateur central (10) à un ou plusieurs des ordinateurs (11, 12, 13).

10. Système informatique comprenant un certain nombre d'ordinateurs (11, 12, 13) reliés les uns aux autres par une connexion de données, notamment par le biais d'un réseau (40), sur lesquels un programme informatique (11, 12, 13) est respectivement installé,
- dans lequel au moins un ordinateur central (10), placé en connexion de données avec tous les ordinateurs (11, 12, 13) et sur lequel un programme de commande test (20) est exécuté, est prévu,
- dans lequel sur chacun des ordinateurs (11, 12, 13) respectivement un programme de commande (31, 32, 33) est mémorisé, qui, lorsqu'il est exécuté sur l'ordinateur (11, 12, 13)
- lors de l'arrivée d'un signal de commande (51, 52, 53) parmi une quantité en particulier modifiable au moment de l'exécution de signaux de commande (51, 52, 53) pouvant être traités par le programme informatique (11, 12, 13) respectif, entreprend une action de programme prédéfinie, qui correspond de préférence à une action de programme pouvant être entreprise ou déclenchée en particulier par l'utilisateur lors de l'exécution du programme informatique (21, 22, 23),
- dans lequel l'ordinateur central (10) transmet respectivement, notamment dans une série prédéfinie, des signaux de commande (51, 52, 53) aux ordinateurs (11, 12, 13) de sorte que, de façon correspondante à ces signaux de commande (51, 52, 53), le programme informatique (21, 22, 23) de l'ordinateur respectif (11, 12, 13) soit actionné,
- dans lequel l'ordinateur central (10), lors de l'exécution du programme de commande test (20), à la suite de la transmission des signaux de commande (51, 52, 53), interroge l'état respectif d'un ou de plusieurs ordinateurs (11, 12, 13) et compare l'état à des valeurs de consigne prédéfinies, dans lequel, notamment, la poursuite du programme de commande test (20) dépend de la vérification de cet état et/ou l'ordinateur central (10) exécute, selon l'état déterminé, respectivement une partie de programme du programme de commande test (20) associée à cet état et
- dans lequel l'ordinateur central (10), lors de l'exécution du programme de commande test (20), identifie les programmes informatiques (21, 22, 23) comme corrects en ce qui concerne une erreur éventuelle de programme lorsque le résultat de comparaison est positif
**caractérisé en ce que**
l'ordinateur central (10) transmet un signal de commande au programme de commande (31, 32, 33) d'un ordinateur (11, 12, 13), qui incite ce programme (21, 22, 23) à effectuer une interaction, selon laquelle des données de cet ordinateur (11, 12, 13) sont transmises à un autre ordinateur (11, 12, 13) et **en ce qu'**ensuite l'ordinateur central (10) interroge l'état de cet autre ordinateur (11, 12, 13) ou du programme (21, 22, 23) exécuté sur cet autre ordinateur (11, 12, 13) depuis l'ordinateur central (10) et **en ce que**, à l'aide de l'état ainsi déterminé, vérifie si les données transmises par l'ordinateur (11, 12, 13) à l'autre ordinateur (11, 12, 13) lui ont été réellement transmises.

11. Système informatique selon la revendication 10, **caractérisé en ce que** l'ordinateur central (10), lors de l'exécution du programme de commande test (20) atteint un des ordinateurs (11, 12,13) par un signal de commande (51, 52, 53) et l'incite ainsi à la transmission de données ou d'informations à au moins un autre ordinateur (11, 12, 13) et interroge notamment, au moins, l'état de cet autre ordinateur (11, 12, 13) ou du programme informatique (21, 22, 23) exécuté sur cet ordinateur (11, 12, 13), dans lequel l'ordinateur central (10) n'a encore transmis aucun signal de commande (51, 52, 53) à cet autre ordinateur à la suite de la vérification.

12. Système informatique selon la revendication 10 ou 11, **caractérisé en ce que** le programme informatique respectif (21, 22, 23) dispose d'une interface utilisateur graphique comprenant une pluralité de champs pouvant être actionnés avec un clavier ou une souris, dans lequel le programme de commande (31, 32, 33), lors de l'arrivée d'un signal de commande prédéfini (51, 52, 53), qui correspond à une interaction avec un champ pouvant être déclenchée ou entreprise par l'utilisateur, incite l'interaction respective avec le programme informatique (21, 22, 23) à commander.

13. Système informatique selon la revendication 12, **caractérisé en ce que** le programme de commande (31, 32, 33) tient à disposition des interactions, qui sont provoquées, sur le programme informatique à commander (21, 22, 23) par un clic ou un glissement du champ avec la souris ou l'entrée avec le clavier de signes dans le champ respectif.

14. Système informatique selon une des revendications 10 à 13, **caractérisé**
- **en ce que** l'ordinateur central (10), avant ou pendant l'exécution du programme de commande test (20), transmet le programme informatique (21, 22, 23) ainsi que le programme de commande (31, 32, 33) sur l'ordinateur respectif (11, 12, 13), les mémorise sur celui-ci et/ou incite leur exécution et/ou tient à disposition le programme informatique (21, 22, 23) pour la réalisation d'autres interactions.

15. Système informatique selon une des revendications 10 à 14, **caractérisé**
- **en ce que** l'ordinateur central (10), pendant ou après l'exécution du programme de commande test (20), met fin au programme informatique (21, 22, 23) ainsi qu'au programme de commande (31, 32, 33) après la vérification et/ou efface le programme informatique (21, 22, 23) de la mémoire de l'ordinateur respectif (11, 12, 13).

16. Système informatique selon une des revendications 10 à 15, **caractérisé en ce que** les ordinateurs (11, 12, 13) sont placés en connexion de données les uns avec les autres lors de la réalisation de la vérification conformément à leur type d'utilisation et **en ce qu'**au moins un ordinateur central (10) est placé en connexion de données avec tous les ordinateurs (11, 12, 13) du réseau (40).

17. Support de données, sur lequel un programme de commande test (20) est mémorisé pour la réalisation d'un procédé selon une des revendications 1 à 9 sur l'ordinateur central (10).

18. Support de données, sur lequel un programme de commande (31, 32, 33) est mémorisé pour la réalisation d'un procédé selon une des revendications 1 à 9 sur l'ordinateur (11, 12, 13).
